# EUROPEAN PATENT APPLICATION

(11) **EP 4 753 115 A1**
(43) Date of publication of application: **03.06.2026**
(21) Application number: 25219779.3
(22) Date of filing: 01.12.2025
(51) Int. Cl.: H02K 1/276, H02K 15/035

(54) **PERMANENT MAGNET ROTOR WITH NON-MAGNETIC FILLER IN FLUX BARRIER**

(30) Priority: 02.12.2024 US 202463726939 P
(71) Applicant: Tesla, Inc., Austin, TX 78725 (US)
(72) Inventor: GE, Hao, Austin, TX 78725 (US); SAYED, Ayesha, Austin, TX 78725 (US); LI, Yingjie, Austin, TX 78725 (US); ZHANG, Bo, Austin, TX 78725 (US); LASKARIS, Konstantinos, Austin, TX 78725 (US); BOECHERER, Aaron, Austin, TX 78725 (US)
(74) Representative: Liesegang, Eva

(57) **Abstract**

A rotor (200) that utilizes non-magnetic fillers (202) to reduce magnetic flux leakage and maintain structural integrity is disclosed. Said rotor (200) includes at least a plurality of rotor laminations (208), a magnet (112), and one or more non-magnetic fillers (202). Said rotor laminations (208) structurally form at least a first cavity and a second cavity. At least one magnet (112) is disposed in said first cavity. Said one or more non-magnetic fillers (202) are disposed in the second cavity and bonded to the plurality of rotor laminations to structurally support the plurality of rotor laminations (208).

## Description

### CROSS-REFERENCE TO PRIORITY APPLICATION

This application claims priority to U.S. Provisional Patent Application No. 63/726,939, entitled "ROTOR STRUCTURE WITH NON-MAGNETIC FILLER," filed on December 2, 2024, the technical disclosure of which is hereby incorporated by reference in its entirety and for all purposes.

### TECHNICAL FIELD

The present disclosure relates to electric motor rotors. More particularly, some embodiments of the present disclosure relate to rotor structures utilizing non-magnetic fillers.

### BACKGROUND

Electric motors used in various applications demand robust structural designs to ensure performance and reliability. Components within electric motors need to maintain structural integrity under various operational stresses. Current rotor designs often employ metallic structures such as steel ribs or bridges to provide structural support for rotors during operation.

However, the use of these metallic structures can lead to increased magnetic losses. These losses can negatively impact motor performance, particularly under high-speed operations. Thus, it may be desirable to design rotor structures to reduce magnetic losses and improve motor performance.

### SUMMARY

In some aspects, the techniques described herein relate to a rotor including: a plurality of rotor laminations structurally forming at least a first cavity and a second cavity, the plurality of rotor laminations configured to conduct a magnetic flux; a magnet disposed in the first cavity, the magnet configured to generate the magnetic flux; and one or more non-magnetic fillers disposed in the second cavity and bonded to the plurality of rotor laminations, wherein the one or more non-magnetic fillers structurally support the plurality of rotor laminations.

In some aspects, the techniques described herein relate to a rotor, wherein the one or more non-magnetic fillers include plastic, epoxy, aluminum, fiber, thermoplastic or thermoset with fiber, composite materials, or high-strength composite materials.

In some aspects, the techniques described herein relate to a rotor, wherein the second cavity includes a first finger-shaped structure and a second finger-shaped structure.

In some aspects, the techniques described herein relate to a rotor, wherein the one or more non-magnetic fillers fill in a gap between the first finger-shaped structure and the second finger-shaped structure to interlock with the plurality of rotor laminations.

In some aspects, the techniques described herein relate to a rotor, wherein the second cavity at least partially encloses a plurality of tabs that extend from the plurality of rotor laminations into the second cavity.

In some aspects, the techniques described herein relate to a rotor, wherein the plurality of tabs extends into the second cavity from every other rotor lamination of the plurality of rotor laminations.

In some aspects, the techniques described herein relate to a rotor, wherein the one or more non-magnetic fillers fill in gaps between the plurality of tabs to interlock with the plurality of rotor laminations.

In some aspects, the techniques described herein relate to a rotor, wherein the plurality of rotor laminations corresponds to multiple lamination patterns.

In some aspects, the techniques described herein relate to a rotor, wherein a first rotor lamination of the plurality of rotor laminations includes a first tab of the plurality of tabs, and wherein a second rotor lamination of the plurality of rotor laminations does not include any tab of the plurality of tabs.

In some aspects, the techniques described herein relate to a rotor, wherein the plurality of rotor laminations corresponds to a single lamination pattern.

In some aspects, the techniques described herein relate to a rotor, wherein a first rotor lamination of the plurality of rotor laminations corresponds to a first orientation applied during an assembly process, wherein a second rotor lamination of the plurality of rotor laminations corresponds to a second orientation applied during the assembly process, and wherein the second orientation is different from the first orientation.

In some aspects, the techniques described herein relate to a rotor, wherein surfaces of the plurality of tabs are flat.

In some aspects, the techniques described herein relate to a rotor, wherein surfaces of the plurality of tabs form wavy or zigzag features to increase contact surfaces between the one or more non-magnetic fillers and the plurality of rotor laminations.

In some aspects, the techniques described herein relate to a motor including the rotor.

In some aspects, the techniques described herein relate to an electric vehicle including the rotor.

In some aspects, the techniques described herein relate to a rotor including: a plurality of rotor laminations structurally forming at least a first cavity and a second cavity; a magnet disposed in the first cavity; and one or more non-magnetic fillers disposed in the second cavity and bonded to the plurality of rotor laminations, wherein the one or more non-magnetic fillers structurally support the plurality of rotor laminations.

In some aspects, the techniques described herein relate to a rotor, wherein the one or more non-magnetic fillers include plastic, epoxy, aluminum, fiber, thermoplastic or thermoset with fiber, composite materials, or high-strength composite materials.

In some aspects, the techniques described herein relate to a rotor, wherein the second cavity includes a first finger-shaped structure and a second finger-shaped structure.

In some aspects, the techniques described herein relate to a rotor, wherein the one or more non-magnetic fillers fill in a gap between the first finger-shaped structure and the second finger-shaped structure to interlock with the plurality of rotor laminations.

In some aspects, the techniques described herein relate to a rotor, wherein the second cavity at least partially encloses a plurality of tabs that extend from the plurality of rotor laminations into the second cavity.

In some aspects, the techniques described herein relate to a rotor, wherein the plurality of tabs extends into the second cavity from every other rotor lamination of the plurality of rotor laminations.

In some aspects, the techniques described herein relate to a rotor, wherein the one or more non-magnetic fillers fill in gaps between the plurality of tabs to interlock with the plurality of rotor laminations.

In some aspects, the techniques described herein relate to a rotor, wherein the plurality of rotor laminations corresponds to multiple lamination patterns.

In some aspects, the techniques described herein relate to a rotor, wherein a first rotor lamination of the plurality of rotor laminations includes a first tab of the plurality of tabs, and wherein a second rotor lamination of the plurality of rotor laminations does not include any tab of the plurality of tabs.

In some aspects, the techniques described herein relate to a rotor, wherein the plurality of rotor laminations corresponds to a single lamination pattern.

In some aspects, the techniques described herein relate to a rotor, wherein a first rotor lamination of the plurality of rotor laminations corresponds to a first orientation applied during an assembly process, wherein a second rotor lamination of the plurality of rotor laminations corresponds to a second orientation applied during the assembly process, and wherein the second orientation is different from the first orientation.

In some aspects, the techniques described herein relate to a rotor, wherein surfaces of the plurality of tabs are flat.

In some aspects, the techniques described herein relate to a rotor, wherein surfaces of the plurality of tabs form wavy or zigzag features to increase contact surfaces between the one or more non-magnetic fillers and the plurality of rotor laminations.

In some aspects, the techniques described herein relate to all embodiments described and discussed above.

### BRIEF DESCRIPTION OF THE DRAWINGS

Embodiments of the present disclosure are described with reference to the accompanying drawings, in which like reference characters reference like elements, and wherein:
FIG. 1 illustrates a top view of a portion of a rotor that utilizes steel ribs to provide structural support.
FIG. 2 illustrates a top view of a portion of an example rotor according to some embodiments of the present disclosure.
FIG. 3A illustrates a top view of a portion of an example rotor according to some embodiments of the present disclosure.
FIG. 3B illustrates a section side view of the portion of the example rotor of FIG. 3A according to some embodiments of the present disclosure.
FIG. 3C illustrates an enlarged view of the portion of the example rotor of FIG. 3A with certain parts removed to reveal internal structures of the example rotor according to some embodiments of the present disclosure.
FIG. 4A illustrates a section side view of a portion of an example rotor according to some embodiments of the present disclosure.
FIG. 4B illustrates an enlarged view of the portion of the example rotor of FIG. 4A with certain parts removed to reveal internal structures of the example rotor according to some embodiments of the present disclosure.

### DETAILED DESCRIPTION

Generally described, one or more aspects of the present disclosure relate to rotor structures for electric motors that can accomplish robust operation under high-speed applications. More specifically, some embodiments of the present disclosure disclose rotor structures that utilize non-magnetic fillers to provide structural support for the rotor and reduce magnetic leakage, thus improving motor performance. In some embodiments, non-magnetic fillers (e.g., plastic, epoxy, fiber, thermoplastic or thermoset with fiber, composite materials, high-strength composite materials, and/or the like) can form various patterns (e.g., fingers, tabs, shear, wave, and/or the like) in rotor laminations to mechanically interlock with the rotor laminations, thereby eliminating the use of metallic structures such as steel ribs or bridges for ensuring structural integrity of the motor.

Advantageously, using non-magnetic fillers rather than metallic materials or structures to provide structural support for a rotor can reduce magnetic leakage introduced by the metallic and magnetic conductive structures. This can in turn improve performance of the rotor and/or a motor that includes the rotor, particularly in high-speed applications. Additionally, various patterns formed by the non-magnetic fillers can increase contact surfaces between the non-magnetic fillers and rotor laminations, thereby providing secure mechanical bonds between the non-magnetic fillers and the rotor laminations. The various patterns may also achieve secure interlocking between the non-magnetic fillers and the rotor laminations, preventing the non-magnetic fillers, rotor laminations, and/or magnets in a rotor from shifting or detaching under high-speed rotations. As such, the rotor can withstand operational stresses without compromising its performance or reliability. Further, the use of non-magnetic fillers may streamline manufacturing processes because the non-magnetic fillers can be molded and integrated with rotor laminations compared with metallic structures/materials (e.g., steel ribs). Using non-magnetic fillers in place of steel ribs may reduce weight of the rotor, which can reduce inertia of the electric motor and improve its dynamic performance.

Typically, rotors for electric motors utilize metallic and magnetic materials and/or structures to provide structural support for the rotor during operation. For example, steel ribs or bridges are usually strategically placed within a rotor to provide structural support (e.g., holding other components, such as magnets in the rotor, in place), ensuring components associated with the rotor can withstand various operational stresses (e.g., centrifugal forces during high-speed rotation). While these metallic structures can be effective in ensuring the structural integrity of the rotor, they can introduce magnetic losses. For example, the magnetic conductive nature of steel ribs or bridges (e.g., silicon steel ribs) can cause magnetic flux to short-circuit through the steel ribs or bridges, leading to less flux crossing the air gap for energy conversion and thus reduced motor performance.

To address at least some of the above problems, rather than using metallic structures or materials to provide structural support for a rotor, some embodiments of the present disclosure disclose rotor structures that utilize non-magnetic fillers to provide structural support for the rotor and reduce magnetic losses, thereby improving motor performance. In some embodiments, the non-magnetic fillers can be made of plastic, epoxy, aluminum, fiber, thermoplastic or thermoset with fiber, composite materials, and/or high-strength composite materials. The non-magnetic fillers can form various patterns (e.g., by injecting the non-magnetic fillers into cavities structurally formed by rotor laminations) in rotor laminations to mechanically interlock with the rotor laminations, thereby eliminating the use of metallic structures such as steel ribs or bridges for ensuring structural integrity of the motor.

In some embodiments, the non-magnetic fillers and/or rotor laminations of a rotor may form finger-like patterns. For example, a rotor lamination can feature multiple finger-like structures which act as wedges for interlocking with the non-magnetic fillers and create a secure mechanical bond after the non-magnetic fillers are injected. More specifically, the non-magnetic fillers may fill spaces between the finger-like structures structurally formed by the rotor lamination. The interlocking mechanism created by the finger-like structures between the non-magnetic fillers and rotor laminations can hold the non-magnetic fillers and the rotor laminations together, prevent the non-magnetic fillers from shifting or detaching, and/or prevent various parts of the rotor from dislodging or shifting during operation. Advantageously, the structural integrity of the rotor may be maintained.

In other embodiments, the non-magnetic fillers and/or rotor laminations of a rotor may form any other patterns to secure interlocking between the non-magnetic fillers and/or the rotor laminations (e.g., through increasing contact surfaces between the non-magnetic fillers and the rotor laminations). For example, in some embodiments, rotor laminations of the rotor may include one or more tabs that extend into a cavity (e.g., a molding cavity) formed by the rotor laminations. The tabs can have a rectangular shape or any other shape, and can project into the cavity in a staggered and/or alternating manner. For example, rotor laminations of a rotor can include (e.g., from top to bottom) a first rotor lamination, a second rotor lamination, a third rotor lamination, a fourth rotor lamination, and so forth. The first rotor lamination may not include a tab, the second rotor lamination can have a first tab that extends into the cavity, the third rotor lamination may not include a tab, and the fourth rotor lamination can have a second tab that extends into the cavity.

In some embodiments, the rotor laminations with tabs (e.g., staggered and/or alternating tabs mentioned above) can be obtained by utilizing laminations with different lamination patterns (e.g., two lamination patterns where a first lamination pattern includes tabs and a second lamination pattern does not include tabs). Alternatively and/or additionally, the rotor laminations with tabs can be obtained by orienting laminations having the same lamination pattern differently (e.g., for a four pole rotor lamination, cavity in the first and third pole has tabs while cavity in second and fourth pole does not have tabs, staggered and/or alternating tabs are created by rotating horizontally a first rotor lamination by 90 degree and rotating a second rotor lamination by 180 degree).

The gaps between two adjacent tabs can be filled by the non-magnetic filler after the non-magnetic filler is injected into the cavity structurally formed by the rotor laminations. The gaps can allow the non-magnetic filler to flow, fill, and/or bond with the rotor laminations to increase bonding strength between the rotor laminations and the non-magnetic filler. In some embodiments, a length of the gap (e.g., a vertical distance of the gap) can be appropriately designed to be large enough to reduce magnetic leakage flux associated with the rotor laminations without overly increasing a size of the rotor laminations.

In some embodiments, surfaces of the tabs may be flat or planar. In other embodiments, the surfaces of the tabs may not be flat but can feature wavy, zigzag, and/or other non-flat structures. For example, the tabs may have wavy surfaces or shapes. The wavy surfaces of the tabs can increase a size of the contact surface between the rotor laminations and the non-magnetic filler, thereby increasing the bonding strength between the rotor laminations and the non-magnetic filler. Advantageously, a rotor formed by the rotor laminations may be less likely to fail under operational stresses, such as centrifugal forces endured under high-speed rotation.

Although the various aspects will be described in accordance with illustrative embodiments and combinations of features, one skilled in the relevant art will appreciate that the examples and combinations of features are illustrative in nature and should not be construed as limiting. More specifically, aspects of the present application may be applicable with various types of structures, electric motors, vehicles, and rotor laminations under different contexts. Still further, although specific structures of rotor laminations that utilize non-magnetic fillers to provide structural support and reduce magnetic leakage flux will be described, such illustrative rotor lamination design or structure should not be construed as limiting. Accordingly, one skilled in the relevant art will appreciate that the aspects of the present application are not necessarily limited to application to any particular types of electric motors, rotor laminations, rotor assemblies or illustrative interconnections between filler materials and rotor laminations.

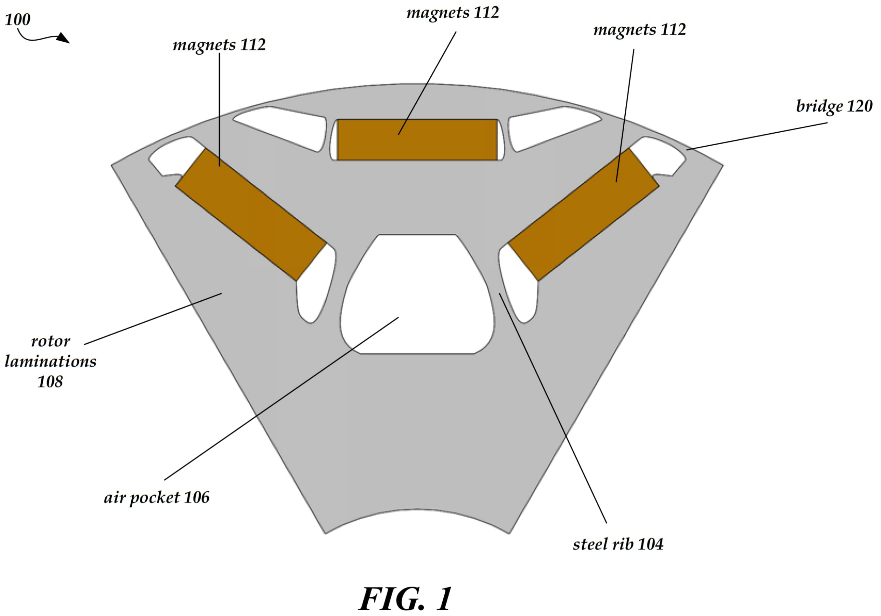

FIG. 1 illustrates a top view of a portion of a rotor 100 utilizing steel ribs to provide structural support. The rotor 100 includes at least magnets 112, steel bridge(s) 120, steel rib(s) 104, an air pocket 106, and rotor laminations 108. The rotor laminations 108 can include thin sheets of metal that are stacked together to form the rotor 100. The rotor laminations 108 can be made of steel, and are designed to conduct magnetic flux generated by the magnets 112 embedded within the rotor 100. It is desirable that the rotor laminations 108 maintain their structural integrity during high-speed operations.

The magnets 112 are embedded within the rotor 100 and can generate the magnetic flux that drives a motor that includes the rotor 100. The magnets 112 can be made of high-strength magnetic materials such as neodymium or samarium-cobalt.

The air pocket 106 can be an intentional void within the rotor 100. The air pocket 106 can be designed to reduce the overall weight of the rotor 100 and/or to provide space for the magnets 112 and other components. The air pocket 106 may help to reduce magnetic leakage by reducing the amount of conductive material within the rotor 100.

The bridge 120 can be a structural component within the rotor 100 and can connect different parts of the rotor laminations 108. The bridge 120 can help hold the magnets 112 and/or rotor laminations 108 in place to ensure that the rotor 100 maintains its shape and structural integrity during operation. The bridge 120 can be made of steel, which can lead to magnetic losses due to its conductive nature.

The steel rib 104 can serve as another structural component within the rotor 100. Similar to the bridge 120, the steel rib 104 can provide support to the rotor laminations 108 and hold the magnets 112 and/or the rotor laminations 108 securely in place. A disadvantage of employing the steel rib 104 is the steel rib 104 can cause magnetic flux to short-circuit through the steel rib 104. As such, the steel rib 104 can also lead to magnetic leakage, resulting in reduced motor performance.

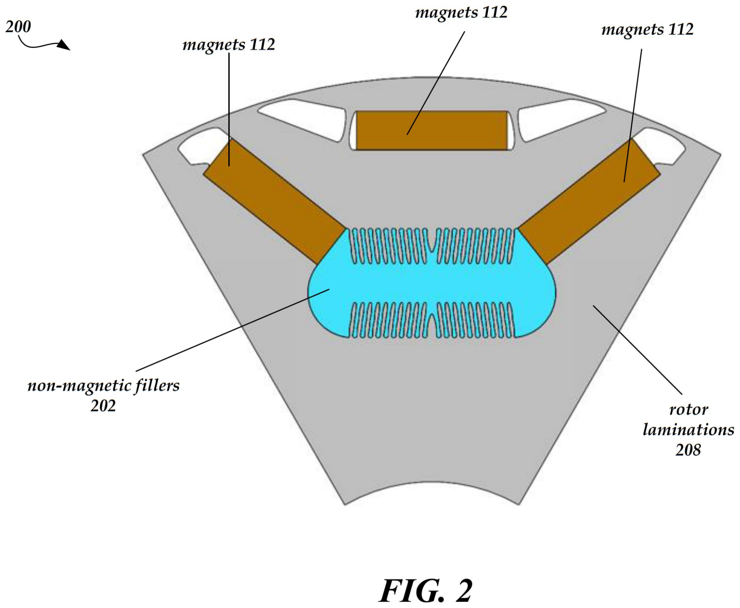

FIG. 2 illustrates a top view of a portion of an example rotor 200 according to some embodiments of the present disclosure. The rotor 200 includes at least rotor laminations 208, magnets 112, and non-magnetic fillers 202. Unless otherwise noted, components of FIG. 2 can be structurally and functionally the same as or generally similar to like-numbered components of FIG. 1. For example, the rotor laminations 208 can include thin sheets of metal stacked together to conduct magnetic flux generated by the magnets 112 embedded within the rotor 200. In contrast to the implementation of FIG. 1 where the steel rib 104 is used to provide structural support for the rotor 100, the non-magnetic fillers 202 are disposed within the rotor 200 (e.g., within the rotor laminations 208) to provide structural support and reduce magnetic losses.

In some embodiments, the non-magnetic fillers 202 can be made of materials such as plastic, epoxy, aluminum, fiber, thermoplastic or thermoset with fiber, composite materials, high-strength composite materials, and/or combinations thereof. The non-magnetic fillers 202 can fill the spaces (e.g., one or more cavities) within the rotor laminations 208 that would otherwise be occupied by metallic structures (e.g., the steel rib 104). As noted above, by replacing the steel rib 104 with the non-magnetic fillers 202, the rotor 200 can achieve structural integrity without the magnetic losses associated with the use of the steel rib 104.

As shown in FIG. 2, the rotor laminations 208 can feature multiple finger-like structures which act as wedges for interlocking with the non-magnetic fillers 202 to create a secure mechanical bond (e.g., between the rotor laminations 208 and the non-magnetic fillers 202) after injecting the non-magnetic fillers 202. In some embodiments, each of the rotor laminations 208 can feature or include the same finger-like pattern.

More specifically, the non-magnetic fillers 202 may fill spaces between the finger-like structures structurally formed by the rotor laminations 208. The interlocking mechanisms created by the finger-like structures between the non-magnetic fillers 202 and the rotor laminations 208 can hold the non-magnetic fillers 202 and the rotor laminations 208 together, prevent the non-magnetic fillers 202 from shifting or detaching, and/or prevent various parts of the rotor 200 from dislodging during operation. Advantageously, the structure integrity of the rotor 200 may be maintained, in particular during high-speed rotation.

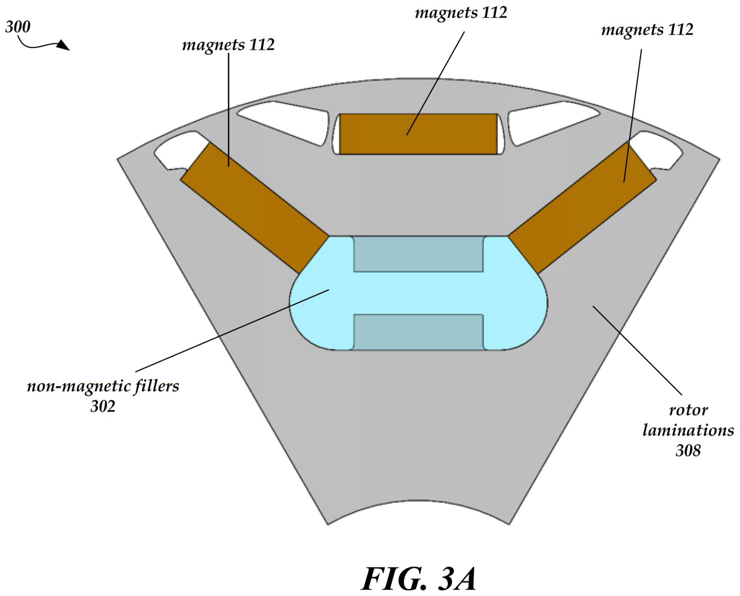

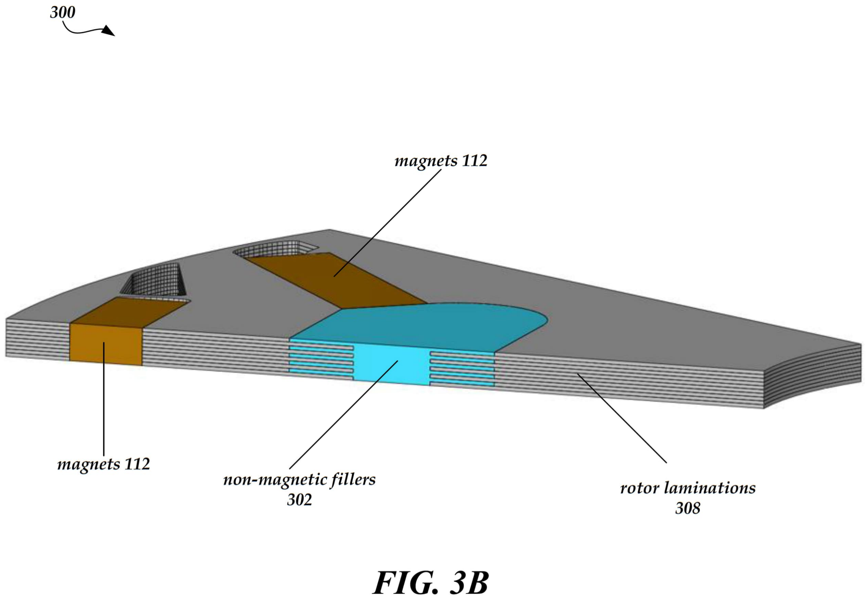

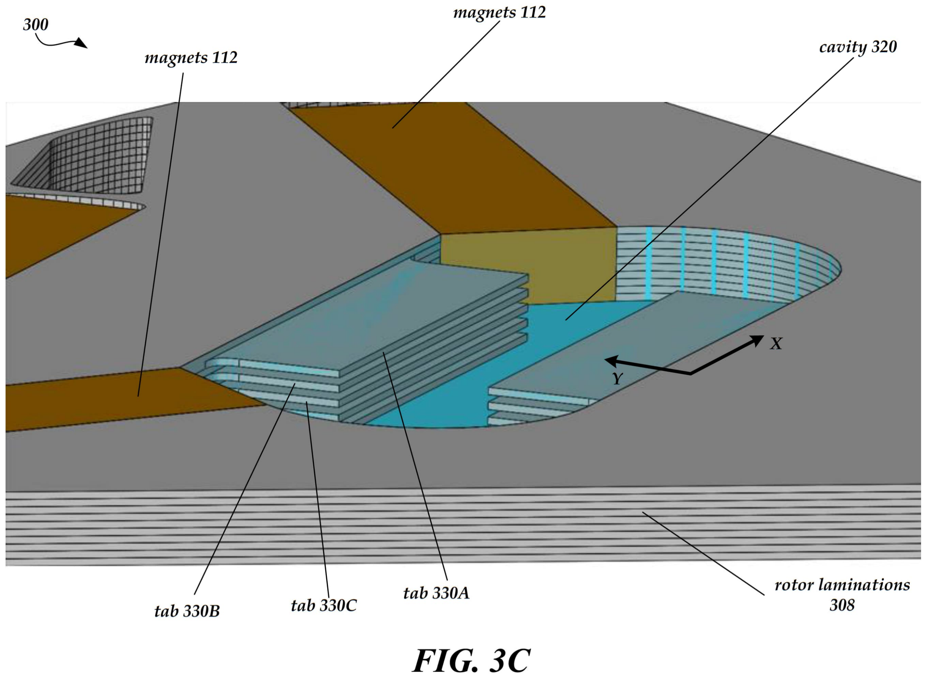

FIG. 3A illustrates a top view of a portion of an example rotor 300 according to some embodiments of the present disclosure. The rotor 300 includes at least rotor laminations 308, magnets 112, and non-magnetic fillers 302. Unless otherwise noted, components of FIG. 3A can be structurally and functionally the same as or generally similar to like-numbered components of FIG. 2. In contrast to the implementation of FIG. 2 where the non-magnetic fillers 202 form finger-like patterns, the non-magnetic fillers 302 can fill the spaces (e.g., one or more cavities) within the rotor laminations 308 to form distinct pattern(s) that will be further illustrated with reference to FIGS. 3B and 3C. Similar to the non-magnetic fillers 202, the non-magnetic fillers 302 are disposed within the rotor 300 to provide structural support and reduce magnetic losses associated with the use of steel ribs 104.

FIG. 3B illustrates a section side view of the portion of the example rotor 300 of FIG. 3A according to some embodiments of the present disclosure. More specifically, FIG. 3B shows an internal structure of a portion of the rotor 300 that includes the rotor laminations 308, the magnets 112, and the non-magnetic fillers 302. The rotor laminations 308 are shown stacked together, with the magnets 112 embedded within the rotor 300. The non-magnetic fillers 302 can be injected into the spaces (e.g., one or more cavities) between the rotor laminations 308, thereby creating a secure mechanical bond that holds the rotor laminations 308 and the non-magnetic fillers 302 together. As noted above, this interlocking mechanism can advantageously prevent the non-magnetic fillers 302 and/or the rotor laminations 308 from shifting or detaching to ensure that the rotor 300 maintains structural integrity during high-speed rotation.

As shown in FIG. 3B, the rotor laminations 308 can include different lamination patterns. For example, the first rotor lamination from the top can include a first lamination pattern, the second rotor lamination from the top can include a second lamination pattern, and the third rotor lamination from the top can include the first lamination pattern, and the fourth rotor lamination from the top can include the second lamination pattern, and so forth. The first lamination pattern can allow more space for the non-magnetic fillers 302 to fill, whereas the second lamination pattern can allow less space for the non-magnetic fillers 302 to fill. In other embodiments, each of the rotor laminations 308 can have the same lamination pattern, but can be oriented (e.g., horizontally rotated) differently to feature differing lamination patterns.

FIG. 3C illustrates an expanded view of the portion of the example rotor 300 of FIG. 3A with certain parts removed to reveal internal structures of the example rotor 300 according to some embodiments of the present disclosure. As shown in FIG. 3C, the rotor 300 includes at least the cavity 320 formed by the rotor laminations 308, the tab 330A, the tab 330B, and the tab 330C. More specifically, at least some non-magnetic fillers 302 are removed from the rotor 300 to reveal the cavity 320 that is formed by the rotor laminations 308.

As shown in FIG. 3C, the rotor laminations 308 include at least the tabs 330A, 330B, and 330C that extend into the cavity 320 formed by the rotor laminations 308. The tabs 330A, 330B, and 330C can have rectangular shapes or any other shape, and can stick out into the cavity 320 in a staggered and/or alternating manner. More specifically, the rotor laminations 308 can include (e.g., from top to bottom) a first rotor lamination, a second rotor lamination, a third rotor lamination, a fourth rotor lamination, and so forth. The first rotor lamination may not include a tab; the second rotor lamination can include the tab 330A that sticks out and extends into the cavity 320; the third rotor lamination may not include a tab; the fourth rotor lamination can include the tab 330B that sticks out and extends into the cavity 320; the fifth rotor lamination may not include a tab; the six rotor lamination can include the tab 330C that sticks out and extends into the cavity 320; and so forth.

As noted above, the rotor laminations 308 with the tabs 330A, 330B, and 330C can be obtained by utilizing laminations with different lamination patterns (e.g., two lamination patterns where a first lamination pattern includes tabs and a second lamination pattern does not include tabs). Alternatively and/or additionally, the rotor laminations 308 with tabs 330A, 330B, and 330C can be obtained by orienting laminations having the same lamination pattern differently (e.g., rotating horizontally a first rotor lamination by 90 degree and rotating a second rotor lamination by 180 degree).

In some embodiments, gaps between two adjacent tabs (e.g., the tab 330A and the tab 330B) can be filled by the non-magnetic fillers 302 after the non-magnetic fillers 302 are injected into the cavity 320 structurally formed or at least partially enclosed by the rotor laminations 308. The gaps can allow the non-magnetic fillers 302 to flow, fill, and/or bond with the rotor laminations 308 to increase bonding strength between the rotor laminations 308 and the non-magnetic fillers 302. In some embodiments, a length of the gap (e.g., a distance of the gap along the "Y" direction) can be appropriately designed to be sufficiently large enough to reduce magnetic leakage flux associated with the rotor laminations 308 without overly increasing a size of the rotor laminations 308.

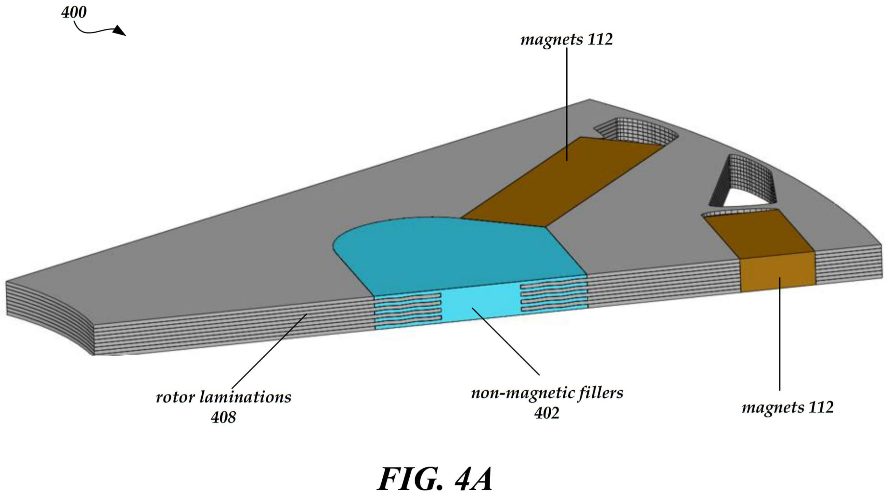

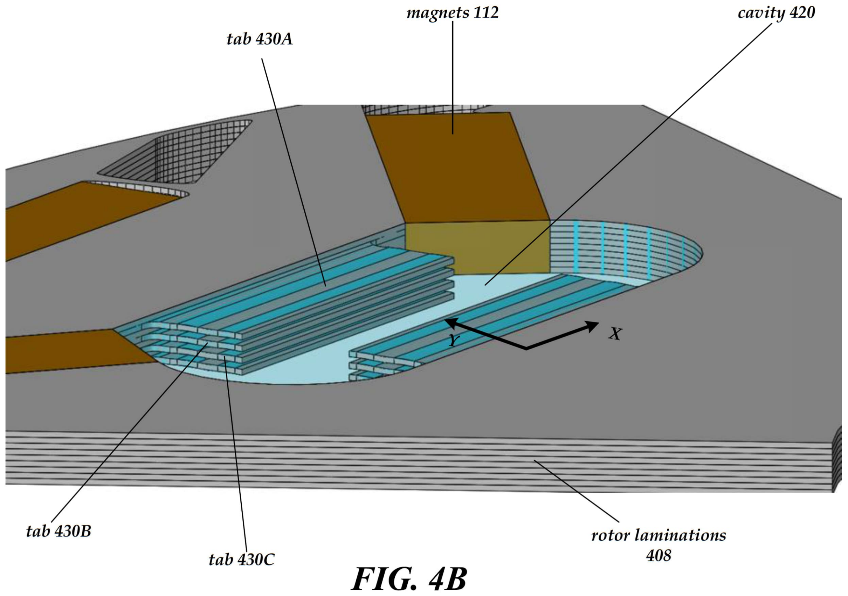

FIG. 4A illustrates a section side view of a portion of an example rotor 400 according to some embodiments of the present disclosure. As shown in FIG. 4A, the rotor 400 includes at least the magnets 112, the rotor laminations 408, and non-magnetic fillers 402. Unless otherwise noted, components of FIG. 4A can be structurally and functionally the same as or generally similar to like-numbered components of FIGS. 2, 3A, 3B, and 3C. In contrast to the implementation of FIG. 3B, the non-magnetic fillers 402 form a wavy feature rather than a flat or planar feature. The wavy feature can increase a size of the contact surfaces between the non-magnetic fillers 402 and the rotor laminations 408 to increase bonding strength between the non-magnetic fillers 402 and the rotor laminations 408. The wavy feature will be further illustrated below with reference to FIG. 4B.

FIG. 4B illustrates an expanded view of the portion of the example rotor 400 of FIG. 4A with certain parts removed to reveal internal structures of the example rotor 400 according to some embodiments of the present disclosure. As shown in FIG. 4B, the rotor 400 includes at least the cavity 420 formed by the rotor laminations 408, the tab 430A, the tab 430B, and the tab 430C. More specifically, at least some non-magnetic fillers 402 are removed from the rotor 400 to reveal the cavity 420 that is formed by the rotor laminations 408. Unless otherwise noted, components of FIG. 4B can be structurally and functionally the same as or generally similar to like-numbered components of FIG. 3C. In contrast to the implementation of FIG. 3C where the tabs 330A, 330B, and 330C are flat, the tabs 430A, 430B, and/or 430C have wavy surfaces or shapes. As noted above, the wavy surfaces of the tabs 430A, 430B, and/or 430C can increase an area of the contact surfaces between the rotor laminations 408 and the non-magnetic fillers 402, thereby increasing the bonding strength between the rotor laminations 408 and the non-magnetic fillers 402. In other embodiments, the surfaces of the tabs 430A, 430B, and/or 430C may exhibit any other non-flat pattern, such as a zigzag pattern. Advantageously, the rotor 400 formed by the rotor laminations 408 may be less likely to fail under operational stresses, such as centrifugal forces endured during high-speed rotation.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, a person of ordinary skill in the art will recognize that changes may be made in form and detail without departing from the scope of the present disclosure. Thus, the present disclosure is limited only by the claims.

In the foregoing specification, the disclosure has been described with reference to specific embodiments. However, as one skilled in the art will appreciate, various embodiments disclosed herein can be modified or otherwise implemented in various other ways without departing from the spirit and scope of the disclosure. Accordingly, this description is to be considered as illustrative and is for the purpose of teaching those skilled in the art the manner of making and using various embodiments of the disclosed display assemblies.

It is to be understood that the forms of disclosure herein shown and described are to be taken as representative embodiments. Equivalent elements, materials, processes or steps may be substituted for those representatively illustrated and described herein. Moreover, certain features of the disclosure may be utilized independently of the use of other features, all as would be apparent to one skilled in the art after having the benefit of this description of the disclosure. Expressions such as "including", "comprising", "incorporating", "consisting of", "have", "is" used to describe and claim the present disclosure are intended to be construed in a non-exclusive manner, namely allowing for items, components or elements not explicitly described also to be present. Reference to the singular is also to be construed to relate to the plural. Further, various embodiments disclosed herein are to be taken in the illustrative and explanatory sense, and should in no way be construed as limiting of the present disclosure.

All joinder references (e.g., attached, affixed, coupled, connected, and the like) are only used to aid the reader's understanding of the present disclosure, and may not create limitations, particularly as to the position, orientation, or use of the systems and/or methods disclosed herein. Therefore, joinder references, if any, are to be construed broadly. Moreover, such joinder references do not necessarily infer that two elements are directly connected to each other. Additionally, all numerical terms, such as, but not limited to, "first", "second", "third", "primary", "secondary", "main" or any other ordinary and/or numerical terms, should also be taken only as identifiers, to assist the reader's understanding of the various elements, embodiments, variations and/or modifications of the present disclosure, and may not create any limitations, particularly as to the order, or preference, of any element, embodiment, variation and/or modification relative to, or over, another element, embodiment, variation and/or modification.

It will also be appreciated that one or more of the elements depicted in the drawings/figures can also be implemented in a more separated or integrated manner, or even removed or rendered as inoperable in certain cases, as is useful in accordance with a particular application.

## Claims

1. A rotor comprising:
a plurality of rotor laminations structurally forming at least a first cavity and a second cavity;
a magnet disposed in the first cavity; and
one or more non-magnetic fillers disposed in the second cavity and bonded to the plurality of rotor laminations,
wherein the one or more non-magnetic fillers structurally support the plurality of rotor laminations.

2. The rotor of claim 1 wherein the plurality of rotor laminations are configured to conduct a magnetic flux and the magnet is configured to generate the magnetic flux.

3. The rotor of one of the preceding claims, wherein the one or more non-magnetic fillers comprise plastic, epoxy, aluminum, fiber, thermoplastic or thermoset with fiber, composite materials, or high-strength composite materials.

4. The rotor of one of the preceding claims, wherein the second cavity comprises a first finger-shaped structure and a second finger-shaped structure.

5. The rotor of claim 4, wherein the one or more non-magnetic fillers fill in a gap between the first finger-shaped structure and the second finger-shaped structure to interlock with the plurality of rotor laminations.

6. The rotor of one of the preceding claims, wherein the second cavity at least partially encloses a plurality of tabs that extend from the plurality of rotor laminations into the second cavity.

7. The rotor of one of the preceding claims, wherein the plurality of tabs extends into the second cavity from every other rotor lamination of the plurality of rotor laminations.

8. The rotor of one of the preceding claims, wherein the one or more non-magnetic fillers fill in gaps between the plurality of tabs to interlock with the plurality of rotor laminations.

9. The rotor of one of the preceding claims, wherein the plurality of rotor laminations corresponds to multiple lamination patterns.

10. The rotor of one of the preceding claims, wherein a first rotor lamination of the plurality of rotor laminations comprises a first tab of the plurality of tabs, and wherein a second rotor lamination of the plurality of rotor laminations does not comprise any tab of the plurality of tabs.

11. The rotor of one of the preceding claims, wherein the plurality of rotor laminations corresponds to a single lamination pattern.

12. The rotor of one of the preceding claims, wherein a first rotor lamination of the plurality of rotor laminations corresponds to a first orientation applied during an assembly process, wherein a second rotor lamination of the plurality of rotor laminations corresponds to a second orientation applied during the assembly process, and wherein the second orientation is different from the first orientation.

13. The rotor of claim 5 and one of the preceding claims, wherein surfaces of the plurality of tabs are flat.

14. The rotor of claim 5 and one of claims 1 to 12, wherein surfaces of the plurality of tabs form wavy or zigzag features to increase contact surfaces between the one or more non-magnetic fillers and the plurality of rotor laminations.

15. A motor comprising the rotor of one of the preceding claims.
